# EUROPEAN PATENT APPLICATION

(11) **EP 1 424 838 A2**
(43) Date of publication of application: **02.06.2004**
(21) Application number: 03019197.7
(22) Date of filing: 25.08.2003
(51) Int. Cl.: H04M 1/725

(54) **Broadcast receiving apparatus, control method thereof, portable information terminal, and control method thereof**

(30) Priority: 29.11.2002 JP 2002347499
(71) Applicant: Kabushiki Kaisha Toshiba, Tokyo (JP)
(72) Inventor: Nakano, Sinichiro, c/o Toshiba Corp., Int Prop.Div, Tokyo 105-8001 (JP)
(74) Representative: Henkel, Feiler & Hänzel

(57) **Abstract**

When there is an incoming call during the reproduction of television broadcast, the received television broadcast data is recorded into a video/audio recorder (20c) on the basis of the operation of a talk key. On the basis of the operation of a hold key, not only the television broadcast data recorded in the video/audio recorder (20c) is reproduced, but also the received television broadcast data is written over the area in which the reproduced television broadcast data was recorded.

## Description

This invention relates to a broadcast receiving apparatus, a broadcast receiving apparatus control method, a portable information terminal, and a portable information terminal control method, and more particularly to a system which harmonizes the function of receiving and reproducing broadcast content with a telephone function.

In recent years, tremendous effort has been directed toward developing next-generation mobile terminals, including IMT (International Mobile Telecommunication)-2000 system compatible mobile phones and mobile satellite broadcasting compatible mobile television set.

Recently, it has been suggested that, as one of the next-generation mobile terminal, a portable broadcast receiving apparatus for receiving mobile satellite broadcasting or ground wave digital broadcasting beamed to mobile terminals should be provided with a telephone function.

If a portable broadcast receiving apparatus is provided with a telephone function, what is important is how to deal with an incoming call in the middle of watching broadcast content. Under the present conditions, sufficient practical measures have not been taken against the problem.

Jpn. Pat. Appln. KOKAI Publication No. 2002-77458 and Jpn. Pat. Appln. KOKAI Publication No. 2001-245024 each have disclosed a configuration which interrupts the reproduction when there is an incoming call in the course of reproducing the content with the mobile phone and, after the call, resumes the reproduction of the content near the place where it was interrupted.

However, the former is based on the assumption that a system capable of requesting content delivery at any location from the delivery station is used. The latter is based on the assumption that the content recorded on the recording medium can be reproduced at any location. Neither the former nor the latter takes into account an incoming call in the middle of watching an ordinary TV broadcast.

It is, accordingly, an object of the present invention is to provide an excellent broadcast receiving apparatus, a control method thereof, a portable information terminal, and a control method thereof which make it possible to deal at a sufficiently practical level with an incoming call in the course of reproducing broadcast content.

According to an aspect of the present invention, there is provided a broadcast receiving apparatus including content reproducing means for receiving and reproducing broadcast content and talking means using a telephone line, the broadcast receiving apparatus comprising: recording means for, when there is an incoming call during the reproduction of the broadcast content, recording the received broadcast content onto a recording medium on the basis of a talk request; and recording and reproducing means for not only reproducing the broadcast content recorded on the recording medium on the basis of a reproduction request but also writing the received broadcast content over the area of the recording medium in which the reproduced broadcast content was recorded.

According to another aspect of the present invention, there is provided a broadcast receiving apparatus control method of controlling a broadcast receiving apparatus including content reproducing means for receiving and reproducing broadcast content and talking means using a telephone line, the broadcast receiving apparatus control method comprising: a step of reproducing the broadcast content received; a step of determining whether there is an incoming call during the reproduction of the broadcast content; a step of, when there is an incoming call, recording the received broadcast content onto a recording medium on the basis of a talk request; and a step of not only reproducing the broadcast content recorded on the recording medium on the basis of a reproduction request but also writing the received broadcast content over the area of the recording medium in which the reproduced broadcast content was recorded.

According to still another aspect of the present invention, there is provided a portable information terminal comprising content reproducing means for receiving broadcast content and displaying an image and talking means using a telephone line, the portable information terminal further comprising: recording means, when there is an incoming call in the middle of displaying an image of the broadcast content, recording the received broadcast content onto a recording medium on the basis of a talk request; and recording and reproducing means for not only reading the broadcast content recorded on the recording medium and displaying an image on the basis of a reproduction request but also writing the received broadcast content over the area of the recording medium in which the broadcast content whose image was displayed was recorded.

According to still another aspect of the present invention, there is provided.

A portable information terminal control method of controlling a portable information terminal comprising content reproducing means for receiving broadcast content and displaying an image and talking means using a telephone line, the portable information terminal control method comprising: a step of displaying an image of the broadcast content received; a step of determining whether there is an incoming call in the middle of displaying an image of the broadcast content; a step of, when there is an incoming call, recording the received broadcast content onto a recording medium on the basis of a talk request; and a step of not only reading the broadcast content recorded on the recording medium and displaying an image on the basis of a reproduction request but also writing the received broadcast content over the area of the recording medium in which the broadcast content whose image was displayed was recorded.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an outside drawing to help explain a portable television broadcast receiving apparatus, which is an embodiment of the present invention;
FIG. 2 is a block diagram to help explain in detail the signal processing system of the portable television broadcast receiving apparatus according to the embodiment;
FIG. 3 is a block diagram to help explain in detail the video/audio recorder according the embodiment;
FIG. 4 is a flowchart to help explain the operation when there is an incoming call in the course of watching a television broadcast in the embodiment; and
FIG. 5 is a flowchart to help explain the operation when there is an incoming call in the course of watching a television broadcast in the embodiment.

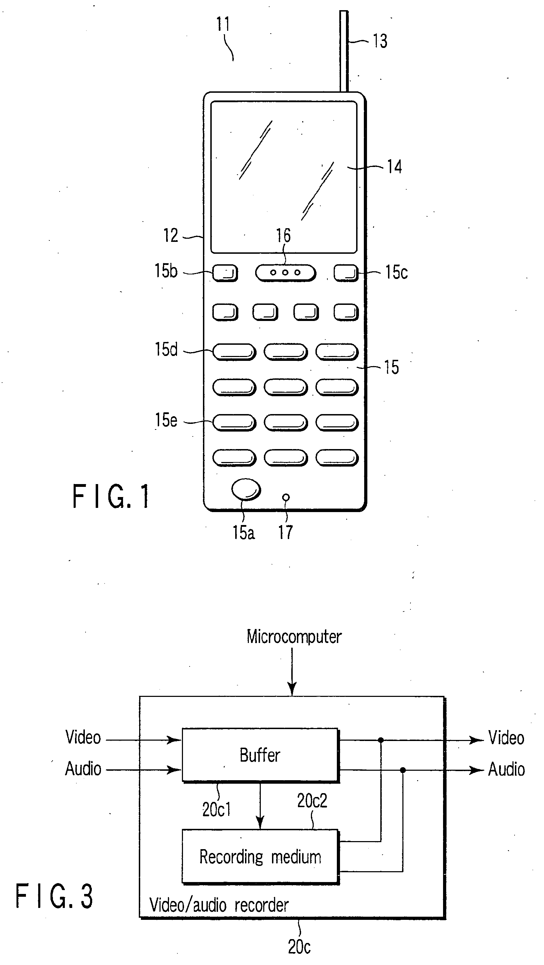

Hereinafter, referring to the accompanying drawings, an embodiment of the present invention will be explained in detail. FIG. 1 shows an outward appearance of a portable television broadcast receiving apparatus 11 to be explained in the embodiment. The broadcast receiving apparatus 11 is provided with the function of a mobile phone as a talking function using a telephone line.

In a body section 12 of the broadcast receiving apparatus 11, an antenna unit 13, a liquid-crystal display 14, an operation unit 15, a speaker unit 16, a microphone unit 17, and others are provided. The antenna unit 13 is configured to have a communication function and a television broadcast receiving function.

The operation unit 15 is composed of a power key 15a, a talk key 15b for starting to speak over the telephone, when there is an incoming call, a hold key 15c for ending the talk over the telephone, a control key group 15d for controlling various functions, a numeric keypad 15e, and others.

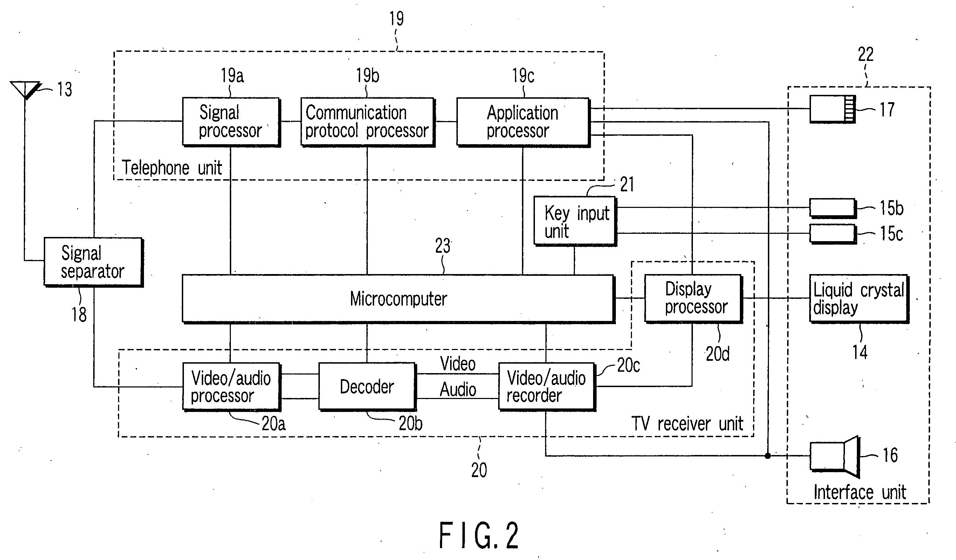

FIG. 2 shows the configuration of signal processing system of the broadcast receiving apparatus 11. The broadcast receiving apparatus 11 is composed of a signal separator 18 connected to the antenna 13, a telephone unit 19, a TV receiver unit 20, a key input unit 21, an interface unit 22, and a microcomputer 23.

The telephone unit 19 has a signal processor 19a, a communication protocol processor 19b, and an application processor 19c. The TV receiver unit 20 has a video/audio processor 20a, a decoder 20b, a video/audio recorder 20c, and a display processor 20d.

The interface unit 22 is composed of the liquid-crystal display 14, operation unit 15 (in FIG. 2, only the talk key 15b and hold key 15c are shown), speaker unit 16, microphone unit 17, and others.

In such a configuration, the telephone function will be explained. An incoming call signal received by the antenna 13 is supplied from the signal separator 18 to the telephone unit 19. In the telephone unit 19a, the signal processor 19a demodulates the inputted incoming call signal and outputs the resulting signal to the microcomputer 23.

When sensing an incoming call, the microcomputer 23 outputs an incoming call notice signal to-the application processor 19c. Receiving the incoming call notice signal, the application processor 19c outputs incoming call display data via the display processor 20d to the liquid-crystal display 14. Then, the incoming notice is displayed on the screen of the liquid-crystal display 14.

At the same time, the application processor 19c outputs incoming call audio data to the speaker 16. The speaker 16 then produces a ringtone.

When the user operates the talk key 15b in response to the incoming call, the operation information is supplied via the key input unit 21 to the microcomputer 23. Receiving the operation information, the microcomputer 23 performs control not only so that the audio signal from the calling party received by the antenna 13 may be processed at the signal processor 19a, communication control protocol processor 19b, and application processor 19c and then reproduced at the speaker 16 but also so that the user's speech may be processed at the microphone 17, application processor 19c, communication protocol processor 19b, signal processor 19a, and signal separator 18, and then transmitted from the antenna 13. As a result, a talk with the calling party is allowed.

When the user operates the hold key 15c, the operation information is inputted via the key input unit 21 to the microcomputer 23. Receiving the operation information, the microcomputer 23 determines that the call is finished, controls the telephone unit 19 into an incoming call waiting state, and ends the process.

Next, the television broadcast receiving function will be explained. A television broadcast signal received by the antenna 13 is tuned by the signal separator 18 according to the tuning operation at the operation unit 15 and then is supplied to the TV receiver unit 20.

In the TV receiver unit 20, the inputted television broadcast signal is demodulated at the video/audio processor 20a. The decoder 20b subjects the demodulated signal to an expansion process and other processes and supplies the resulting video and audio data to the video/audio recorder 20c.

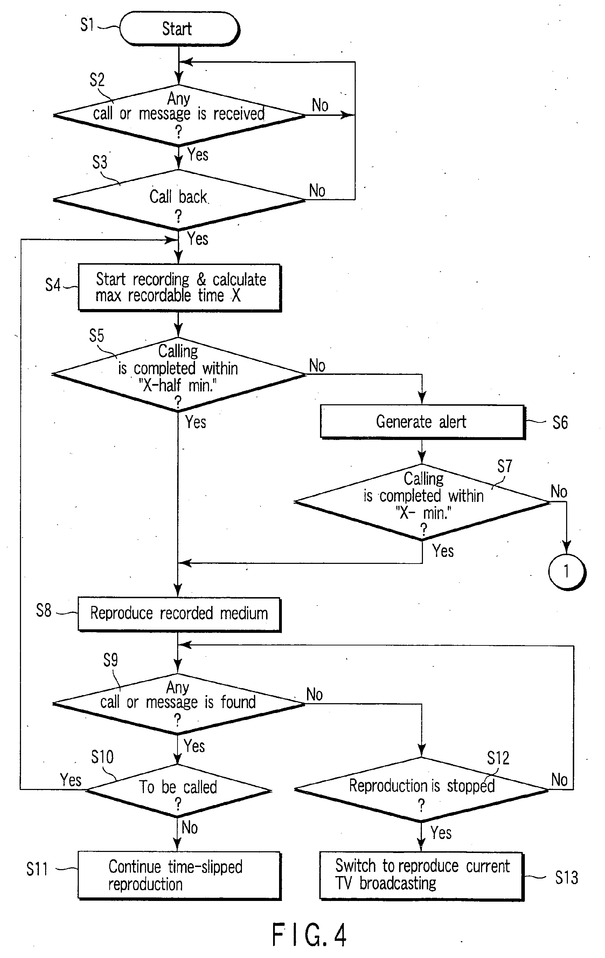

As shown in FIG. 3, the video/audio recorder 20c is composed of a buffer 20c1 and a recording medium 20c2, such as a hard disk, for recording the data held in the buffer 20c1.

When an ordinary television broadcast is reproduced, the video data and audio data inputted to the video/audio recorder 20c are outputted as they are via the buffer 10c1, that is, they are outputted without being recorded onto the recording medium 20c2.

Then, the video data outputted from the video/audio recorder 20c is displayed via the display processor 20d on the screen of the liquid-crystal display 14. The audio data outputted from the video/audio recorder 20c is reproduced at the speaker 16. As a result, the television broadcast is reproduced.

The following is an explanation of the operation when there is an incoming call in the course of reproducing a television broadcast. As described above, the incoming call signal received by the antenna 13 is separated by the signal separator 18 and is demodulated by the signal processor 19a of the telephone unit 19. The demodulated signal is outputted to the microcomputer 23.

When sensing an incoming call, the microcomputer 23 outputs an incoming call notice signal to the application processor 19c. Receiving the incoming call notice signal, the application processor 19c outputs incoming call display data via the display processor 20d to the liquid-crystal display 14. Then, the incoming notice is displayed on the liquid-crystal display 14 in such a manner that the notice is superposed on the television broadcast image.

At the same time, the application processor 19c outputs incoming call audio data to the speaker 16. The speaker 16 then produces a ringtone in such a manner that the sound is superposed on the television broadcast sound.

To respond to the incoming call, the user operates the talk key 15b. Then, the operation information is supplied via the key input unit 21 to the microcomputer 23. At this time, the microcomputer 23 determines that the communication mode turns on and outputs a record start signal to the video/audio recorder 20c.

Then, the video/audio recorder 20c operates so as to record the video data and audio data inputted to the buffer 20c1 onto the recording medium 20c2 without outputting the video and audio data to the interface unit 22.

Having determined that the communication mode has been turned on, the microcomputer 23 brings the telephone unit 19 into the busy state as explained in the telephone function. As a result, the reproduction of the television broadcast is interrupted and the talk with the calling party is realized.

When the user operates the hold key 15c after finishing the talk, the operation information is inputted via the key input unit 21 to the microcomputer 23. Then, the microcomputer 23 determines that the' talk has been finished and brings the telephone unit 19 into the incoming call waiting state.

At this time, the microcomputer 23 outputs a reproduction start signal to the video/audio recorder 20c. Then, the video/audio recorder 20c reads the video data and audio data recorded in the recording medium 20c2 according to the recorded time sequence and overwrites sequentially the recording area from which the data was read with the new video data and audio data obtained from the decoder 20b. That is, time-slipped reproduction is carried out.

As a result,'the reproduction of the broadcast content following the broadcast content at the time when the reproduction was interrupted is started at the time when the hold key 15c is operated after the user has finished the talk. This helps prevent the user to miss the middle part of the broadcast content because of the call.

When there is an incoming call, the user just operates the talk key 15b, with the result that the television broadcast receiving function is switched to the telephone function automatically and the video data and audio data are recorded automatically. After finishing the call, the user just operates the hold key 15c, with the result that the telephone function is switched to the television broadcast receiving function automatically and the video data and audio data are reproduced automatically. This makes it easy for the user to handle the apparatus.

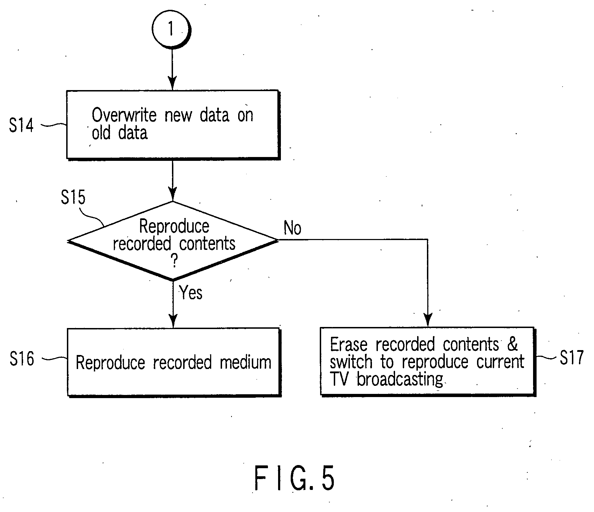

FIGS. 4 and 5 are flowcharts to help explain the operations when there is an incoming call while the user is watching television. First, when control is started (step S1) in the middle of reproducing a television broadcast, the microcomputer 23 determines in step S2 whether there is an incoming call. If there is an incoming call (YES), the microcomputer 23 determines in step S3 whether there is a talk request, that is, whether the talk key 15b has been operated.

If a talk request is made (YES), the microcomputer 23, in step S4, causes the video/audio recorder 20c to start a recording operation. At this time, the microcomputer 23 calculates the maximum recordable time X (minutes) of the video and audio data from the remaining recording capacity of the recording medium 20c2.

Thereafter, in step S5, the microcomputer 23 determines whether the call was finished within the time X - 0.5 (minutes) obtained by subtracting a specific reference time (e.g., 0.5 minute) from the maximum recordable time X (minutes), that is, whether the hold key 15c was pressed within X - 0.5 (minutes) since the talk was started.

If the talk is not finished (NO), the microcomputer 23, in step S6, gives a warning to the user. The warning is given by, for example, displaying such a message as "the capacity is full" on the liquid-crystal display 14, causing the speaker 16 to produce a specific voice message or a warning sound, or vibrating the apparatus 11.

Thereafter, in step S7, the microcomputer 23 determines whether the talk was finished within the maximum recordable time X (minutes). If the talk was finished within the maximum recordable time X (minutes) (YES), or if the talk was finished within the maximum recordable time X - 0.5 (minutes) in step S5 (YES), the microcomputer 23, in step S8, reads the video data and audio data recorded on the recording medium 20c2, according to the time sequence in which the recording was done, and reproduces them.

As a result, the reproduction is started from the part where the reproduction of the television broadcast content was interrupted. Also in step 8, the recording medium 20c2 is overwritten with new video data and audio data sequentially, thereby carrying out follow-up reproduction as described earlier.

Thereafter, the microcomputer 23, in step S9, determines whether there is an incoming call again in the middle of reproducing the television broadcast. If there is an incoming call again (YES), the microcomputer 23 determines in step S10 whether the user talks over the telephone.

If the user talks over the telephone (YES), the microcomputer 23 returns control to step S4. If the user does not talk over the telephone (NO), the microcomputer 23, in step S11, continues the time-slipped reproduction of the recording medium 20c2 in step S8.

In addition, if there is not an incoming call again in the middle of reproducing the television broadcast in step S9 (NO), the microcomputer 23, in step S12, determines whether a request to stop the reproduction of the video data and audio data from the recording medium 20c2 has been made.

If a request to stop the reproduction has not been made (NO), the microcomputer 23 returns control to step S9. If a request to stop the reproduction has been made (YES), the microcomputer 23 switches to the operation of reproducing the television broadcast content now on the air.

If the talk was not finished within the maximum recordable time X (minutes) in step S7 (NO), the microcomputer 23, in step S14, continues recording the video and audio data exceeding the maximum recordable time X (minutes) in such a manner that the area in which the old video data and audio data are written are overwritten sequentially with the exceeding video and audio data.

Thereafter, the microcomputer 23, in step S15, determines whether to reproduce the contents recorded on the recording medium 20c2. The determination is made by displaying, for example, the message "Although the television program is not continuous, do you want to reproduce it?" on the liquid-crystal display 14 and prompting the user to operate the key corresponding to YES or NO in the operation unit 15.

If reproduction is requested (YES), the microcomputer 23, in step S16, starts to reproduce the oldest video data and audio data recorded on the recording medium 20c2. In this case, too, follow-up reproduction is carried out.

If reproduction is not requested (NO), the microcomputer 23, in step S17, erases the contents recorded on the recording medium 20c2 and switches to the operation of reproducing the television broadcast content now on the air.

In the aforementioned operation, when the talk is not finished within the time X - 0.5 (minutes) obtained by subtracting a specific reference time (e.g., 0.5 minute) from the maximum recordable time X (minutes), a warning is given to the user. This enables the user to recognize the talk end timing that prevents the user from missing the middle part of the broadcast content, which is convenient for the user.

When the portable television broadcast receiving apparatus 11 has the function of accessing the Internet, the recording medium 20c2 can also serve as a recording medium for recording the data downloaded from the Internet.

In this case, according to the amount of data downloaded from the Internet, the maximum recordable time X (minutes) when there is an incoming call during the reproduction of the television broadcast increases or decreases. That is, if necessary, the user can determine whether to increase the amount of data downloaded from the Internet or lengthen the maximum recordable time X (minutes). In this respect, the apparatus is convenient for the user to use.

In a state where the talk is finished and the follow-up reproduction of the broadcast content recorded on the recording medium 20c2 is carried out, it is possible to catch up with the current television broadcast by fast-forwarding, for example, the unnecessary parts (the scenes the user does not want to watch) and thereby decreasing the amount of data recorded on the recording medium 20c2 sequentially.

Furthermore, the broadcast receiving apparatus 11 can also has the function of not only recording and reproducing the data onto and from the recording medium 20c2 but also carrying out fast-forward, fast-rewind, high-speed reproduction, slow reproduction, or temporary stop according to the user's operation.

In addition, the received broadcast content may be recorded into or reproduced from the video/audio recorder 20c, even when the user is not talking over the telephone.

With the above configuration and method, when there is an incoming call in the middle of reproducing the broadcast content, the received broadcast content is recorded onto the recording medium on the basis of a talk request, the broadcast content is reproduced from the recording medium on the basis of a reproduction request, and the area of the recording medium in which the reproduced broadcast content was recorded is overwritten with the received broadcast content.

As a result, when the talk is finished, the reproduction of the broadcast content following the one at the time when the talk was requested is started, which helps prevent the user from missing the middle part of the broadcast content because of the talk. This makes it possible to deal at a sufficiently practical level with an incoming call received during the reproduction of broadcast content.

While the description above refers to a particular embodiment of the present invention, it will be understood that many modifications may be made without departing from the spirit thereof. The accompanying claims are intended to cover such modifications as would fall within the true scope and spirit of the present invention. The presently disclosed embodiment is therefore to be considered in all respects as illustrative and not restrictive, the scope of the invention being indicated by the appended claims, rather than the foregoing description, and all changes that come within the meaning and range of equivalency of the claims are therefore intended to be embraced therein.

As described in detail, with an embodiment of the present invention, it is possible to provide an excellent broadcast receiving apparatus, a control method thereof, a portable information terminal, and a control method thereof which make it possible to deal at a sufficiently practical level with an incoming call received during the reproduction of broadcast content.

## Claims

1. A broadcast receiving apparatus including a content reproducer for receiving to reproduce broadcast content and a talking unit using a telephone line, the broadcast receiving apparatus comprising:
a recording unit (20c) configured to record the received broadcast content onto a recording medium in response to a talk request when there is an incoming call during the reproduction of the broadcast content; and
a recording and reproducing unit (20c) configured to reproduce the broadcast content recorded on the recording medium in response to a reproduction request and to write the received broadcast content over an area of the recording medium in which the reproduced broadcast content is recorded.

2. The broadcast receiving apparatus according to claim 1, **characterized in that** the recorder unit, when recording the broadcast content onto the recording medium, is configured to give a warning in a state where a recordable time of the recording medium becomes shorter than a preset specific time.

3. The broadcast receiving apparatus according to claim 1, **characterized in that** the recording unit, when the recordable time of the recording medium has run out, is configured to write the received broadcast content sequentially over an area where old broadcast content is recorded in the recording area of the recording medium and to continue recording the broadcast content.

4. The broadcast receiving apparatus according to claim 1, **characterized in that** the recording unit is configured to record the received broadcast content onto the recording medium in response to an operation of a talk start request key.

5. The broadcast receiving apparatus according to claim 1, **characterized in that** the recording and reproducing unit is configured to reproduce the broadcast content from the recording medium and to overwrite the recording medium with broadcast content in response to an operation of a talk end key.

6. The broadcast receiving apparatus according to claim 3, **characterized in that** the recording and reproducing unit is configured to display that the broadcast content reproduced from the recording medium is discontinued to the broadcast content obtained when the talk request is given.

7. The broadcast receiving apparatus according to claim 1, **characterized in that** the recording and reproducing unit configured to be capable of fast-forwarding partially in reproducing the broadcast content recorded on the recording medium.

8. A method of controlling a broadcast receiving apparatus including a content reproducer for receiving and reproducing broadcast content and a talking unit using a telephone line, the broadcast receiving apparatus control method comprising:
reproducing (S8 in FIG. 4) the broadcast content received;
determining (S9) whether there is an incoming call during the reproduction of the broadcast content;
when there is an incoming call (Yes at S10), recording (S4) the received broadcast content onto a recording medium in response to a talk request; and
reproducing (S8) the broadcast content recorded on the recording medium in response to a reproduction request, and writing (S14 in FIG. 5) the received broadcast content over an area of the recording medium in which the reproduced broadcast content is recorded.

9. The method according to claim 8, **characterized by** further comprising when there is an incoming call and the received broadcast content is recorded onto the recording medium in response to the talk request, giving (S6 in FIG. 4) a warning in a state where (No at S5) the recordable time of the recording medium becomes shorter than a preset specific time (30 sec).

10. The method according to claim 8, **characterized by** further comprising when there is an incoming call and the recordable time of the recording medium is run out in recording the received broadcast content onto the recording medium, writing (S14 in FIG. 5) the received broadcast content sequentially over an area where old broadcast content is recorded in the recording area of the recording medium so that recording of the broadcast content is continued.

11. A portable information terminal comprising the broadcast receiving apparatus of claim 1.

12. The method of claim 8 for use with a portable information terminal comprising a content reproduce configured to receive broadcast content and to display an image, and a talking unit using a telephone line, said method further comprising:
displaying (before Sl in FIG. 4) an image of the broadcast content received;
determining (S2) whether there is an incoming call in the middle of displaying an image of the broadcast content;
when there is an incoming call, recording (S4) the received broadcast content onto a recording medium in response to a talk request; and
reading (S8) the broadcast content recorded on the recording medium to display an image in response to a reproduction request, and writing (S14) the received broadcast content over an area of the recording medium in which recorded is the broadcast content whose image is displayed.

13. The method according to claim 12, **characterized by** further comprising when there is an incoming call and the received broadcast content is recorded onto the recording medium in response to a talk request, giving (S6) a warning in a state where'the recordable time of the recording medium becomes shorter than a preset specific time.

14. The method according to claim 12, **characterized by** further comprising when there is an incoming call and the recordable time of the recording medium is run out in recording the received broadcast content onto the recording medium, writing (S14) the received broadcast content sequentially over the area where old broadcast content is recorded in the recording area of the recording medium and continuing recording the broadcast content.
